# EUROPÄISCHE PATENTANMELDUNG

(11) **EP 0 570 622 A1**
(43) Veröffentlichungstag der Anmeldung: **24.11.1993**
(21) Anmeldenummer: 92119193.8
(22) Anmeldetag: 10.11.1992
(51) Int. Cl.: H04M 1/00

(54) **Schaltungsanordnung für Fernsprechendgeräte**

(30) Priorität: 09.05.1992 DE 4215825
(71) Anmelder: DETEWE - DEUTSCHE TELEPHONWERKE Aktiengesellschaft & Co., D-10997 Berlin (DE)
(72) Erfinder: Baumeister, Rolf, W-1000 Berlin 21 (DE); Jankowsky, Florian, W-1000 Berlin 10 (DE); Neuhaus, Hans-Jürgen, W-1000 Berlin 41 (DE)

(57) **Zusammenfassung**

Für den wahlweisen Anschluß von Fernsprechendgeräten, insbesondere Systemtelefonen, an Zweidraht- oder Vierdraht-Teilnehmerleitungs-Schnittstellen bei jeweils vollem Erhalt der implementierten Leistungsmerkmale wird das Endgerät mit zwei Modems versehen. Im Vierdrahtbetrieb wird ein Modern für eine Gleichstrom-Datenübertragung mit niedrigem Pegel eingesetzt, im Zweidrahtbetrieb ein Modem für eine Datenübertragung mit einer Trägerfrequenz oberhalb des Sprachbandes. Zur Kopplung von Sprech- und Zeichengabeadern werden Dioden und dynamisch hochohmige Drosseln eingesetzt. Im Vierdrahtbetrieb wird das Endgerät über die Zeichengabeadern, im Zweidrahtbetrieb über die Sprechadern von der Telekommunikationsanlage gespeist.

## Beschreibung

Die Erfindung betrifft eine Schaltungsanordnung für Fernsprechendgeräte für den wahlweisen Anschluß an rechnergesteuerte Telekommunikationsanlagen, die über eine Vielzahl implementierter Leistungsmerkmale verfügen, über Zweidraht- oder Vierdraht-Teilnehmerleitungs-Schnittstellen, zum uneingeschränkten Erhalt sämtlicher Leistungsmerkmale.

Für rechnergesteuerte, komfortable Telekommunikationsanlagen sind als Endgeräte Systemtelefone bekannt, die über Vierdraht-Schnittstellen angeschlossen werden, wobei zwei Anschlußadern der Sprachübertragung und zwei weitere Anschlußadern der Speisung und der Signalisierung dienen (DE-39 23 960 A1). Derartige klagen umfassen Leistungsmerkmale wie die Nutzung verschiedener Wahlverfahren, Amtsberechtigungen, Anrufsignalisierung, Anrufzuordnung, Nachtschaltung, Ruhe vor dem Telefon, Gebührenerfassung, Wecken, Makeln, Wahlwiederholung, Wahl bei aufgelegtem Handapparat, Durchsagen, Lauthören, Freisprechen sowie die Steuerung zusätzlicher Einrichtungen, wie z. B. Türöffnen, Fernwirken und akustisches Raumüberwachen.

An herkömmlichen Telekommunikationsanlagen ohne die genannten Leistungsmerkmale werden die Endgeräte zweiadrig angeschlossen. Ein Systemwechsel zu einer Komfortanlage ist damit immer mit einem Austausch der vorhandenen Zweidrahtinstallation gegen eine neue Vierdrahtinstallation verbunden. Dieser Nachteil wird von einer bekannten Telekommunikationsanlage mit Vierdraht-Schnittstellen dadurch umgangen, daß deren Systemtelefone zweidrähtig anschließbar sind. Die vorhandenen Leistungsmerkmale stehen dabei jedoch nur eingeschränkt zur Verfügung.

Eine Weiterentwicklung der erstgenannten Anlage gestattet den Anschluß von Systemtelefonen ausschließlich zweidrähtig, wobei die Speisung, Sprachübertragung und die Signalisierung nur über die zwei Adern ohne Einschränkung von Leistungsmerkmalen abgewickelt werden (P 42 10 167.0).

Der Erfindung lag die Aufgabe zugrunde, ein universelles Fernsprechendgerät bzw. Systemtelefon zu schaffen, das sowohl an die Vierdraht-Schnittstellen der erstgenannten Anlagen (DE-39 23 960 A1) als auch an die Zweidraht-Schnittstellen der letztgenannten Anlagen (P 42 10 167.0) angeschlossen werden kann, das die Art der Schnittstellen selbständig erkennt und in beiden Anschlußarten sämtliche vorhandenen Leistungsmerkmale der Telekommunikationsanlagen nutzen kann.

Diese Aufgabe ist durch die Erfindung gelöst, wie sie im Kennzeichnungsteil des ersten Patentanspruches dargelegt ist. Weitere vorteilhafte Ausgestaltungen sind Gegenstand der Unteransprüche.

Nachfolgend wird die Erfindung anhand eines Blockschaltbildes näher erläutert, wobei die Schutzmaßnahmen gegen Überspannung und Verpolung nicht dargestellt sind.

Ein Systemtelefon der eingangs genannten rechnergesteuerten Telekommunikationsanlage, das vierdrähtig angeschlossen ist, enthält die Bausteine: Sprechschaltung SS, Spannungsregler SR, Mikrocomputer MC mit Tastatur T und Display LC, Speisewiderstände RS und ein Modem GDN für eine Gleichstrom-Datenübertragung mit niedrigem Pegel. Um ein solches Endgerät zweidrähig anschließen zu können, wurden ein Speisedetektor SD, Koppelkondensatoren CK, Drosseln ED und ein Modem DOV hinzugefügt. Das Modem DOV gestattet über eine zweidrähtige Leitung sowohl die Speisung als auch die gleichzeitige Übertragung von Sprache und Daten nach dem Data-Over-Voice-Verfahren.

Bei einem vierdrähtigen Anschluß wird das Endgerät über die Zeichengabeadern C, D gespeist. Der Speisestrom fließt von der Zeichengabeader C über den Speisewiderstand RS in die Schaltung des Endgerätes, die als Lastwiderstand RL symbolisiert ist, parallel dazu durch den Shunt-Spannungsregler SR, der eine konstante Betriebsspannung VC gewährleistet, und über einen weiteren Speisewiderstand RS zur Zeichengabeader D.

Über die Sprechadern A, B werden gleichstromfrei die Signale in Sende- und Empfangsrichtung übertragen. Die Sprechschaltung SS enthält eine Gabelschaltung zur Richtungstrennung, Verstärker für Mikrofon, Freisprecheinrichtung, Hörkapsel und Lautsprecher und bildet die Abschlußimpedanz der Sprechadern A, B.

Signalisierungsdaten werden mittels des Modems GDN übertragen, so beispielsweise eine Tastenbetätigung der Tastatur T oder Anzeigen auf dem Display LC. Die Spannung zwischen den Zeichengabeadern C und D wird dabei entsprechend den logischen Signalen an der Leitung Tx1 vom Mikrocomputer MG zum Modem GDN moduliert.

Bei einem zweidrähtigen Anschluß des Endgerätes werden die Zeichengabeadern C, D nicht beschaltet. Das Endgerät wird über die Sprechadern A, B gespeist. Der Shunt-Spannungsregler SR ist über jeweils eine Reihenschaltung von Diode DI und Drossel ED mit den Sprechadern A, B verbunden. Die Drosseln ED, die elektronisch ausgeführt sein können, dienen dem symmetrischen Auskoppeln des Gleichstromes. Die Drosseln ED sind gegenüber den anliegenden Sprechwechselströmen hochohmig, so daß die Ströme nicht auf den Shunt-Spannungsregler SR einwirken können. Um die Sprechschaltung SS gleichstromfrei zu halten, sind in die Sprechadern A, B Koppelkondensatoren CK geschaltet.

Die Signalisierungsdaten werden beim Zweidrahtbetrieb mit Hilfe des Modems DOV oberhalb des Sprachbandes mit einer Trägerfrequenz von z. B. 32 kKz übermittelt. Entsprechend den logischen Signalen am Eingang Tx2 des Modems DOV wird an den Sprechadern A, B die Amplitude des Trägersignals moduliert.

Bandfilter im Modem DOV verhindern, daß die beim Übertragen der logischen Zustände entstehenden niederfrequenten Anteile der Signale zu Störgeräuschen im Sprachband führen. Auch durch Schalten des Trägersignals im Nulldurchgang sind die Störanteile zu vermeiden.

Tiefpaßfilter in der Sprechschaltung SS vermeiden Empfangsrichtungsstörungen durch Überlagerung des Sprachsignals mit dem Trägersignal des Modems DOV.

Zum selbständigen Erkennen und Umschalten der Schnittstelle dient der an die Sprechader A geschaltete Speisedetektor SD. Das Potential an der Sprechader A wird gemessen und vom Mikrocomputer MG ausgewertet. Bei zweidrähtigem Anschluß des Endgerätes ist das Potential höher als bei vierdrähtigem Anschluß, da im letzten Fall keine Gleichspannung zwischen den Sprechadern A und B liegt. Der Speisestrom sucht sich demzufolge abhängig von der Schnittstelle seinen Weg entweder über die Speisewiderstände RS oder über die Drosseln ED.

Die in Reihe geschalteten Dioden DI verhindern im Vierdrahtbetrieb ein Durchgreifen der Betriebsspannung VC über die Drosseln ED auf die gleichstromfreien Sprechadern A und B.

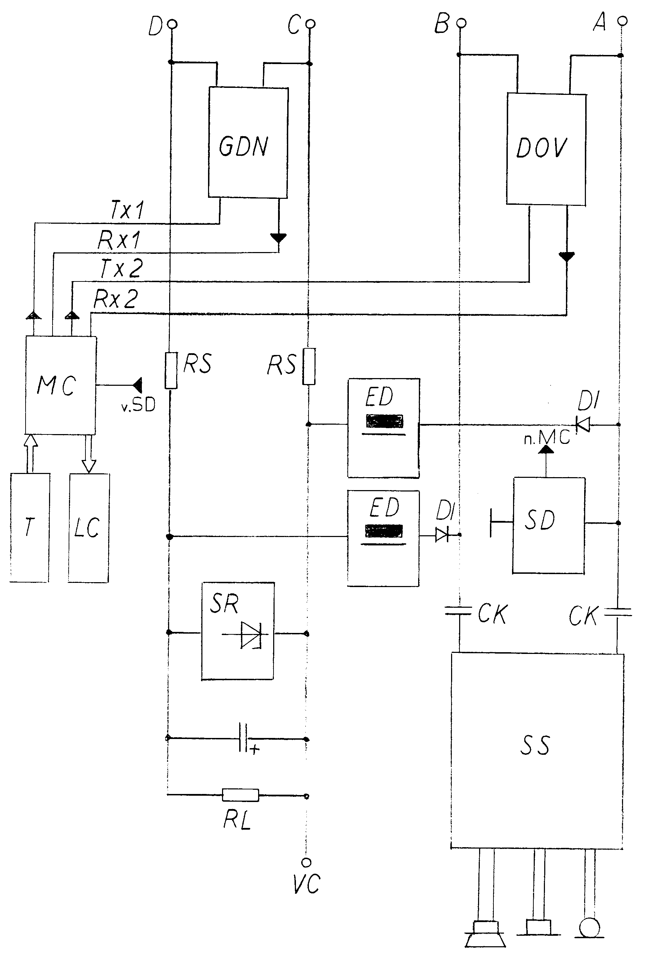

## Patentansprüche

1. Schaltungsanordnung für Fernsprechendgeräte für den wahlweisen Anschluß an rechnergesteuerte Telekommunikationsanlagen, die über eine Vielzahl implementierter Leistungsmerkmale verfügen, über Zweidraht- oder Vierdraht-Teilnehmerleitungs-Schnittstellen, zum uneingeschränkten Erhalt sämtlicher Leistungsmerkmale, dadurch gekennzeichnet, daß das Endgerät über vier Anschlußadern (A, B, C, D) verfügt, wobei zwischen den Sprechadern (A, B) ein Modem (DOV) für eine Datenübertragung mit einer Trägerfrequenz oberhalb des Sprachbandes und zwischen den Zeichengabeadern (C, D) ein Modem (GDN) für eine Gleichstrom-Datenübertragung mit niedrigem Pegel geschaltet sind,
daß an die eine Sprechader (A) ein Speisedetektor (SD) für das selbständige Erkennen der angeschlossenen Teilnehmerleitungs-Schnittstelle geschaltet ist,
daß die Sprechadern (A, B) und die Zeichengabeadern (C, D) über Drosseln (ED) miteinander gekoppelt sind und
daß die Signalisierungen und die Zeichengabe im Zweidrahtbetrieb über das Modem (DOV) für eine Datenübertragung mit einer Trägerfrequenz oberhalb des Sprachbades und im Vierdrahtbetrieb über das Modem (GDN) für eine Gleichstrom-Datenübertragung mit niedrigem Pegel gesteuert werden.

2. Schaltungsanordnung nach Anspruch 1, dadurch gekennzeichnet, daß im Vierdrahtbetrieb das Endgerät über die Zeichengabeadern (C, D) und Speisewiderstände (RS) sowie einem Shunt-Spannungsregler (SR) zum Erzeugen einer konstanten Betriebsspannung (VC) gespeist wird.

3. Schaltungsanordnung nach Anspruch 1, dadurch gekennzeichnet, daß im Zweidrahtbetrieb das Endgerät über die Sprechadern (A, B) gespeist wird, wobei die elektronischen Drosseln (ED) einerseits der symmetrischen Auskopplung des Speisegleichstromes dienen und andererseits die Sprechwechselströme gegenüber dem Shunt-Spannungsregler (SR) sperren.

4. Schaltungsanordnung nach Anspruch 1 und 2, dadurch gekennzeichnet, daß in Reihe mit den elektronischen Drosseln (ED) Dioden (DI) geschaltet sind zum Sperren der gleichstromfreien Sprechadern (A, B) gegenüber der Betriebsspannung (VC) im Vierdrahtbetrieb.
